# FASCICULE DE BREVET EUROPEEN

(11) **EP 3 087 712 B1**
(45) Date de publication et mention de la délivrance du brevet: **27.04.2022**
(21) Numéro de dépôt: 14831015.4
(22) Date de dépôt: 23.12.2014
(51) Int. Cl.: H04L 27/10, H04L 27/14, H04W 56/00, H04Q 9/00, H04W 4/70

(54) **PROCÉDÉ DE TRANSMISSION DE DONNÉES PAR LIAISON RADIOFRÉQUENCE DANS UNE INSTALLATION DE TÉLÉRELÈVE**
VERFAHREN ZUR DATENÜBERTRAGUNG ÜBER EINE HOCHFREQUENZVERBINDUNG IN EINER REMOTE-LESEVORRICHTUNG
METHOD FOR TRANSMITTING DATA BY RADIOFREQUENCY LINK IN A REMOTE-READING APPARATUS

(30) Priorité: 26.12.2013 FR 1363582
(43) Date de publication de la demande: 02.11.2016
(73) Titulaire: GRDF, 75009 Paris (FR); SUEZ Groupe, 92040 Paris la Défense CEDEX (FR)
(72) Inventeur: LACOSTE, Robert, F-92370 Chaville (FR); DORNSTETTER, Jean-Louis, F-78460 Choisel (FR)
(74) Mandataire: Fédit-Loriot
(86) Numéro de dépôt international: PCT/FR2014/053533
(87) Numéro de publication internationale: WO 2015/097405

(56) Documents cités:
- WO-A1-2012/173573
- US-A1- 2004 190 663
- US-A1- 2010 075 611
- US-A1- 2011 243 277
- KIM J ET AL: "AN ISM BAND CMOS INTEGRATED WIRELESS TELEMETRY TRANSCEIVER (IN A 0.18 MUM COPPER CMOS PROCESS)", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA, vol. CONF. 53, 6 mai 2001 (2001-05-06), pages 2813-2817, XP001076272, ISBN: 978-0-7803-6728-9

## Description

La présente invention se rapporte à la gestion des communications dans une installation de télérelève. Elle concerne plus particulièrement un procédé pour gérer des transmissions de données numériques par liaison radiofréquence dans une installation de télérelève.

Une installation de télérelève comprend classiquement plusieurs dispositifs de comptage, par exemple des compteurs d'eau, de gaz, d'électricité ou autre, ainsi que des systèmes de passerelle communiquant d'une part, avec les dispositifs de comptage et, d'autre part, avec un réseau de télécommunications externe.

Les dispositifs de comptage transmettent vers un ou plusieurs systèmes de passerelle des données, par exemple des données de consommation d'eau et plus généralement des données de consommation de fluide ou d'énergie ou encore des données issues de mesures (température, pollution, etc.). Chaque système de passerelle transmet les données reçues des dispositifs de comptage vers le réseau de télécommunications. Les données ainsi collectées peuvent ensuite être analysées, par exemple afin de facturer les clients et également à des fins de détection de fuites éventuelles ou autres défaillances.

Les dispositifs de comptage comprennent un module radiofréquence, pour communiquer avec le ou les systèmes de passerelle voisin(s). Ce module radiofréquence peut par exemple émettre des ondes de relativement courte portée, par exemple à une fréquence porteuse de 169 MHz, ou bien encore à 433 MHz ou 868 MHz.

Un système de passerelle comprend un dispositif concentrateur, ou armoire de collecte, installé par exemple dans un local technique d'immeuble, et un (ou plusieurs) dispositif d'émission/réception radiofréquence, installé par exemple sur le toit de l'immeuble, pour communiquer avec les modules radiofréquence des dispositifs de comptage. Ainsi, les données reçues des dispositifs de comptage sont transmises vers le dispositif concentrateur installé sur le site, qui les rassemble et les transfère à l'opérateur de l'installation via le réseau de télécommunication externe.

A des fins de fiabilité, les installations de télérelève nécessitent le déploiement de dispositifs d'émission/réception radiofréquences pour système de passerelle à la fois en nombre suffisant et en position optimisée de façon à pouvoir assurer une liaison radiofréquence suffisamment fiable avec l'ensemble des dispositifs de comptage. Cette exigence, qui vise à garantir une collecte optimale des données fournies par les dispositifs de comptage au niveau des concentrateurs de données, a un impact direct sur le coût de déploiement d'une telle installation, qu'il est bien entendu souhaitable de réduire.

A l'heure actuelle, les communications radio entre les différents équipements des installations de télérelève sont basées sur l'utilisation d'un protocole radiofréquence conforme à la norme européenne EN 13757-4. Ce protocole standard impose une modulation de fréquence de type FSK, GFSK ou 4GFSK selon les modes. D'après les contraintes techniques de cette norme, le récepteur associé doit être un récepteur de type FSK non cohérent impliquant un rapport Eb/N0 (Eb = Energie par bit transmis, N0 = Puissance spectrale du bruit) de l'ordre de 12dB pour un taux d'erreur binaire de 10⁻⁴. Typiquement, la sensibilité atteignable pour un tel récepteur est de l'ordre de - 174dBm + 10log(B) + Eb/N0 + NF, avec B le débit binaire et NF le facteur de bruit du récepteur, d'où par exemple une sensibilité maximale de l'ordre de - 123dBm (déciBel par rapport au milliWatt) avec B=2400bps, Eb/N0=12dB et NF=5dB. Or, pour que le signal reçu soit intelligible pour le récepteur, il faut que ce dernier ait une sensibilité suffisante. Dit autrement, la puissance effective du signal reçu doit être supérieure à la sensibilité de du récepteur, faute de quoi le signal ne pourra pas être utilisé.

Aussi, afin de fiabiliser les communications, il a été envisagé d'augmenter la puissance du signal émis au niveau des modules radiofréquences des dispositifs de comptage, mais cette solution est coûteuse en termes de consommation de la pile électrique fournissant l'alimentation requise aux dispositifs de comptage et se fait donc au détriment de la durée d'autonomie de celle-ci, ce qui n'est pas souhaitable.

On connaît par ailleurs des documents de brevet FR2961054 ou FR2977943 des solutions permettant d'améliorer la sensibilité du récepteur en utilisant une modulation à bande très étroite. Chaque émetteur est préalablement configuré pour émettre des signaux dans une sous-bande fréquentielle très étroite de la ressource fréquentielle disponible garantissant ainsi un niveau faible de collisions entre signaux émis par des émetteurs différents. On connaît également du document de brevet FR289400 une solution mettant en œuvre un codage des signaux transmis en étalement de spectre à séquence directe (DSSS, pour direct Spread Spectrum Sequence) associé côté réception à un corrélateur numérique. On connaît également du document de brevet US 2010/0075611 A1 (Budampati et al.), 25 mars 2010, un dispositif d'émission/réception radiofréquence pour un système de passerelle d'une installation de télérelève, la transmission étant effectuée via une porteuse modulée suivant une modulation par déplacement de fréquence GFSK à indice de modulation égal à 2.

Cependant, ces solutions, outre qu'elles risquent d'augmenter la complexité et le coût des modules radiofréquence des dispositifs de comptage et des dispositifs d'émission/réception radiofréquence des systèmes de passerelle, présentent l'inconvénient de n'être plus compatibles avec la norme en vigueur sur laquelle est basée le protocole de communication radiofréquence utilisé par la plupart des installations de télérelève.

Il existe donc un besoin pour un procédé pour gérer des transmissions de données numériques par liaison radiofréquence dans une installation de télérelève, qui permettrait de concilier respect de la norme en vigueur pour le protocole de communication radiofréquence utilisé et optimisation de la performance de la liaison radiofréquence de sorte à améliorer la sensibilité des récepteurs déployés dans une telle installation.

A cette fin, il est proposé un procédé pour gérer des transmissions de données numériques dans une installation de télérelève comprenant une pluralité de dispositifs de comptage, chaque dispositif de comptage comprenant un module de comptage et un module radiofréquence comprenant un émetteur-récepteur radiofréquence pour communiquer avec un dispositif d'émission/réception radiofréquence d'un système de passerelle de ladite installation, ledit procédé comprenant une étape d'émission d'un signal numérique dudit module radiofréquence vers ledit dispositif d'émission/réception radiofréquence et/ou dudit dispositif d'émission/réception radiofréquence vers ledit module radiofréquence, ladite émission étant effectuée via une porteuse modulée suivant une modulation par déplacement de fréquence, ledit procédé étant caractérisé en ce que ladite modulation par déplacement de fréquence est à indice de modulation strictement égal à 0,5 ce qu'il comprend une étape de réception du signal émis suivant ladite modulation et en ce qu'on utilise le signal reçu, émis suivant ladite modulation, pour piloter une boucle à verrouillage de phase apte à générer un signal de synchronisation synchronisé sur la modulation, ledit signal de synchronisation pilotant un détecteur destiné à réaliser une détection synchrone du signal reçu grâce audit signal de synchronisation.

Ainsi, côté émission, la modulation générée est cohérente en phase et par conséquent, il n'y a pas de discontinuité de phase dans le signal modulé transmis. Une telle technique de modulation permet avantageusement d'effectuer la synchronisation côté réception sur le signal reçu en exploitant l'information de phase de la porteuse, ou au moins offre une aide à la synchronisation et partant, permet de récupérer l'information transportée par le signal reçu au moyen d'un détecteur synchrone. Une telle gestion des transmissions permet d'améliorer notablement les performances côté réception en termes de rapport Eb/N0, une démodulation synchrone permettant un gain typique de 3 dB par rapport à une démodulation asynchrone classiquement utilisée.

Autrement dit, la modulation par déplacement de fréquence à indice de modulation strictement égal à 0,5 permet avantageusement d'exploiter une méthode de synchronisation fréquentielle côté récepteur conduisant à une détection synchrone des bits transmis. Cette détection nécessite en particulier de disposer d'une référence synchronisée sur la modulation que permet justement de fournir la boucle à verrouillage de phase mise en œuvre côté récepteur et apte à générer un signal de synchronisation synchronisé sur la modulation pour piloter un détecteur assurant une détection synchrone des bits transmis. Ainsi, les paramètres des signaux reçus, et en particulier la fréquence et la phase, sont connus au niveau du récepteur grâce à la synchronisation, de sorte qu'on obtient un récepteur cohérent.

Dès lors que la sensibilité en réception est améliorée, on peut bénéficier d'une plus longue portée d'émission et ainsi étendre la couverture d'une installation de télérelève, tout en limitant les modifications à apporter aux équipements déjà mis en place dans des installations existantes. Du fait de ce gain en sensibilité en réception, on peut avantageusement se permettre d'augmenter la distance entre les dispositifs de comptage et les dispositifs d'émission/réception radiofréquence du ou des systèmes de passerelle dans l'installation de télérelève, et ainsi réduire le nombre de dispositifs d'émission/réception radiofréquence nécessaires et partant, simplifier la mise en œuvre et l'infrastructure d'une telle installation.

Alternativement ou en complément, on peut aussi choisir de profiter de ce gain en sensibilité pour réduire la puissance d'émission des dispositifs de comptage, tout en s'assurant que l'ensemble des données fournis par ces derniers sont bien reçues. Ceci peut être particulièrement avantageux, dans la mesure où les modules radiofréquences des dispositifs de comptage sont généralement alimentés par des piles électriques, et sont destinés à fonctionner pendant une période de temps de l'ordre de 15 à 20 ans.

Encore un autre avantage du gain en sensibilité en réception est qu'on peut arriver à récupérer des informations représentatives de données issues de dispositifs de comptage qui sont par nature difficiles à récupérer, en particulier celles issues de dispositifs de comptage positionnés dans un environnement susceptible d'entraver une bonne transmission par liaison radiofréquence.

Le choix de spécifier plus précisément la modulation telle que prévue dans la norme en vigueur mentionnée ci-dessus, de façon à caractériser un émetteur à phase cohérente et partant, d'avoir la possibilité de prévoir en réception un récepteur synchrone à phase cohérente, permet ainsi de fiabiliser les communications radiofréquences entre équipements dans une installation de télérelève et ce, de façon relativement simple et bon marché.

En outre, l'invention peut permettre de limiter les modifications à apporter aux équipements déjà mis en place dans des installations de télérelèves existantes.

L'invention concerne en outre un dispositif d'émission/réception radiofréquence pour un système de passerelle d'une installation de télérelève comprenant en outre une pluralité de dispositifs de comptage, chaque dispositif de comptage comprenant un module de comptage et un module radiofréquences pour communiquer avec ce dispositif d'émission/réception radiofréquence, et ce système de passerelle comprenant en outre un dispositif concentrateur en communication d'une part avec ce dispositif d'émission/réception radiofréquences, et d'autre part avec au moins un réseau de télécommunications externe, le dispositif d'émission/réception radiofréquence étant caractérisé en ce qu'il comprend un récepteur radiofréquence comprenant des moyens de réception pour recevoir d'au moins un dispositif de comptage un signal de modulation à déplacement de fréquence à phase cohérente, ladite modulation par déplacement de fréquence étant à indice de modulation strictement égal à 0,5, des moyens de synchronisation comportant une boucle à verrouillage de phase apte à générer un signal de synchronisation synchronisé sur la modulation et un détecteur destiné à réaliser une détection synchrone dudit signal reçu grâce au signal de synchronisation généré de façon que ladite détection soit synchronisée en fonction dudit signal reçu.

Avantageusement, le dispositif d'émission/réception radiofréquence comprend un émetteur radiofréquence comprenant des moyens de modulation d'une porteuse par déplacement de fréquence, lesdits moyens de modulation étant agencés pour moduler la porteuse selon un indice de modulation strictement égal à 0,5 de façon que la modulation générée soit à phase cohérente.

Le dispositif d'émission/réception radiofréquence peut comprendre un processeur, par exemple un DSP (de l'anglais « Digital Signal Processing »), un microcontrôleur, un micro processeur et/ou autre.

Il est en outre proposé un dispositif de comptage pour une installation de télérelève du type comprenant un module de comptage et un module radiofréquence pour communiquer avec au moins un dispositif d'émission/réception radiofréquence d'un système de passerelle de ladite installation de télérelève, ledit module radiofréquence comprenant un émetteur radiofréquence comprenant des moyens de modulation d'une porteuse par déplacement de fréquence, caractérisé en ce que lesdits moyens de modulation sont agencés pour moduler la porteuse selon un indice de modulation strictement égal à 0,5 de façon que la modulation générée soit à phase cohérenteet en ce que ledit module radiofréquence dudit dispositif de comptage comprend un récepteur radiofréquence comprenant des moyens de réception pour recevoir dudit dispositif d'émission/réception radiofréquence un signal de modulation à déplacement de fréquence à phase cohérente, des moyens de synchronisation , comportant une boucle à verrouillage de phase, apte à générer un signal de synchronisation synchronisé sur la modulation et un détecteur destiné à réaliser une détection synchrone dudit signal reçu grâce au signal de synchronisation généré de façon que ladite détection soit synchronisée en fonction dudit signal reçu.

Le module radiofréquence peut comprendre un processeur, par exemple un microcontrôleur et un composant émetteur/récepteur bas coût à synthèse de fréquence, et/ou un DSP ou autre.

Il est en outre proposé une installation de télérelève notamment de compteurs d'eau ou de gaz, comprenant une pluralité de dispositifs de comptage selon l'invention et un système de passerelle comprenant au moins un dispositif d'émission/réception radiofréquence selon l'invention.

L'invention peut trouver une application particulière dans la télérelève de compteur d'eau, mais elle n'est pas limitée à cet exemple d'application. On pourra par exemple prévoir de mettre en œuvre l'invention avec des compteurs d'électricité, des compteurs de gaz, ou autre.

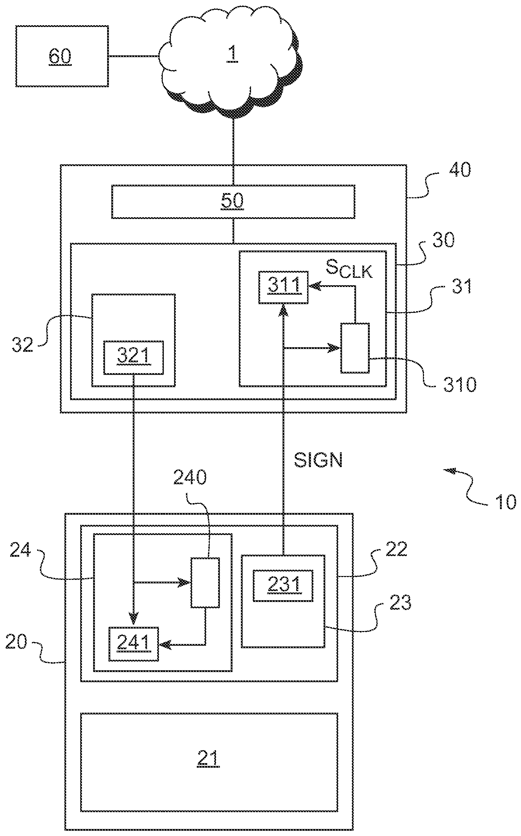

D'autres particularités et avantages de l'invention ressortiront à la lecture de la description faite ci-après d'un mode de réalisation particulier de l'invention, donné à titre indicatif mais non limitatif, en référence à la figure 1 illustrant schématiquement un exemple d'installation de télérelève selon un mode de réalisation de l'invention.

Une installation de télérelève 10 comprend un parc de dispositifs de comptage, ou compteurs 20. Chaque dispositif de comptage 20 comprend un module de comptage 21 agencé pour mesurer par exemple une consommation d'eau, c'est-à-dire que l'installation peut être une installation de télérelève de compteurs d'eau. Plus généralement, les modules de comptage du dispositif de comptage 20 peuvent être agencés pour mesurer une consommation de fluide, d'énergie ou autre, ou bien encore pour mesurer une valeur de paramètre. Les modules de comptage peuvent par exemple comprendre des capteurs, par exemple des capteurs de température, de pression, de niveau ou autre. L'invention pourra ainsi trouver une application dans le domaine de la télésurveillance d'un réseau de distribution de fluide ou d'énergie.

Chaque dispositif de comptage 20 comprend en outre un module radiofréquence 22 comprenant notamment une antenne non représentée, pour communiquer avec un dispositif d'émission/réception radiofréquence 30 d'un système de passerelle 40. Le module radiofréquences 22 émet des ondes dans une bande libre par exemple autour de 169 MHz.

Classiquement, on installe un ou plusieurs dispositifs de comptage 20 par logement. On prévoit en outre des systèmes de passerelle 40, par exemple un système de passerelle 40 par immeuble, ou par groupe d'habitations. Il est souhaitable que chaque système de passerelle 40 communique avec un ensemble de dispositif de comptage 20. Chaque système de passerelle 40 peut ainsi comprendre un dispositif concentrateur de données 50, et un ou plusieurs dispositifs d'émission/réception radiofréquences 30. Par exemple, on installe un dispositif concentrateur de données 50 dans une armoire de collecte dans un hall d'entrée d'immeuble, et trois ou quatre dispositifs d'émission/réception radiofréquence sur le toit de l'immeuble ou sur les murs, de façon à s'assurer de la réception de toutes les trames de données émises par les différents dispositifs de comptage de l'immeuble.

La liaison entre le dispositif concentrateur de données 50 et le ou les dispositifs d'émission/réception radiofréquence 30 est par exemple une liaison de type Ethernet. Le système de passerelle 40 est par ailleurs en communication avec un serveur central 60 géré par un opérateur du réseau de distribution de fluide ou d'énergie par l'intermédiaire d'un réseau de télécommunication 1, Ce réseau de télécommunication 1 entre le serveur distant 3 et le système de passerelle 40 peut être un réseau WAN (de l'anglais « Wide Area Network »), par exemple un réseau filaire, un réseau sans fil de type réseau GPRS (de l'anglais « General Packet Radio Service »), ou autre.

Dans l'art antérieur, et comme exposé plus haut, dans la plupart des installations de télérelève telles que celle qui vient d'être décrite, les communications entre les dispositifs de comptage et les dispositifs d'émission/réception radiofréquence du système de passerelle sont basées sur l'utilisation d'un protocole de communication radiofréquence conforme à la norme européenne EN 13757-4. Ce protocole standard impose une modulation par déplacement de fréquence de type FSK, GFSK ou 4GFSK selon les modes. La déviation de fréquence est typiquement spécifiée avec une assez grande latitude, par exemple +/- 2,2 KHz à +/- 2,6 KHz pour un débit binaire de 2400 bps (bits par seconde), ce qui signifie que la fréquence de la porteuse rayonnée par un dispositif de comptage pendant ses périodes d'activité se trouve être décalée de sa valeur centrale qui caractérise le canal assigné au dispositif de comptage, de plus ou moins les valeurs de déviation mentionnées ci-dessus durant chaque période de temps correspondant à la durée de transmission d'un bit, le signe de la déviation dépendant de la valeur du bit à transmettre.

Ainsi, le module radiofréquence 22 de chaque dispositif de comptage 20 comporte un émetteur radiofréquence 23, du type comprenant des moyens de modulation 231 de type FSK, conformes aux spécifications de la norme EN13757-4. Conformément à l'invention, ces moyens de modulation 231 sont définis avec une spécification plus restrictive eu égard à la norme précitée et, en l'occurrence, sont agencés selon l'invention pour moduler la porteuse selon un indice de modulation strictement égal à 0,5 de façon que la modulation générée soit à phase cohérente. Il n'y a ainsi pas de discontinuité de phase dans le signal émis en sortie du module radiofréquence 22 à destination du dispositif d'émission/réception radiofréquence 30. Pour ce faire, les moyens de modulation 231 peuvent être réalisés sous la forme d'un circuit intégré d'émission classique intégrant un synthétiseur de fréquence et un modulateur numérique, lequel étant alors configuré pour réaliser une modulation de la porteuse de type FSK d'indice de modulation strictement égal à 0,5. La modulation générée est de là cohérente en phase.

Un signal SIGN de modulation à déplacement de fréquence de type FSK à phase cohérente est donc émis depuis le dispositif de comptage 20 à destination du système de passerelle 40. Conformément à l'invention, le dispositif d'émission/réception radiofréquence 30 du système de passerelle comprend un récepteur radiofréquence 31 configuré pour exploiter les spécificités de la modulation mise en œuvre afin d'améliorer la performance du récepteur en termes de rapport Eb/N0. En particulier, le récepteur radiofréquence 31 comprend une boucle à verrouillage de phase 310, qui reçoit en entrée un signal issu d'un oscillateur non représenté, tandis que le signal SIGN de modulation à phase cohérente reçu est utilisé comme référence pour la boucle à verrouillage de phase 310, cette boucle à verrouillage de phase 310 générant un signal de synchronisation SCLK synchronisé sur la modulation et le débit binaire (les deux étant synchrones) du signal de modulation SIGN reçu. La sortie de cette boucle à verrouillage de phase 310 est utilisée pour piloter un détecteur 311 du récepteur radiofréquence 31, destiné à réaliser la détection synchrone des bits transmis grâce au signal de synchronisation SCLK généré de façon que ladite détection soit synchronisée en fonction dudit signal reçu.

Le récepteur 31 du dispositif d'émission/réception 30 du système de passerelle 40 peut être de type classique mais pourra avantageusement être réalisé sous la forme d'un récepteur radiofréquence défini par logiciel (Software Defined Radio, SDR). Dans ce cas, le récepteur pourra comporter une partie de traitement analogique du signal reçu, comprenant des moyens de filtrage, de préamplification et de transposition de fréquence, par exemple de type zéro-IF ou low-IF, associée à un convertisseur analogique-numérique (I/Q ou low IF) et une partie de traitement numérique réalisée par un processeur de type DSP (Digital Signal Processor), assurant la démodulation du signal selon les principes exposés ci-dessus et, en particulier, supportant les fonctionnalités de filtrage numérique, de verrouillage de phase, de démodulation numérique et de correction d'erreur le cas échéant.

Un tel récepteur FSK à phase cohérente permet une performance de l'ordre de Eb/N0=9dB pour un taux d'erreur binaire de 10-4. Cette solution permet donc d'améliorer de 3dB les performances de la liaison, tout en conservant une très grande compatibilité avec la norme EN13757-4.

Dans le cas d'un indice de modulation égal à 2 (par exemple avec une modulation de +/-2,4KHz et un débit binaire de 2400bps), le récepteur peut exploiter la présence d'une paire de raies discrètes de forte amplitude (50% de la puissance totale) situées à +/-2,4KHz de la porteuse afin d'obtenir rapidement une estimation fiable de la fréquence centrale et du débit binaire. Un détecteur synchrone peut avantageusement être construit sur cette base en utilisant la partie déterministe du signal.

Dans le cas particulier d'un indice de modulation égal à 0,5 (par exemple avec une modulation de +/-1,2KHz et un débit binaire de 4800bps), le récepteur de l'invention peut exploiter le fait que la modulation est presque équivalente à une modulation offset QPSK à un codage différentiel près. Le récepteur de l'invention peut de là utiliser une approximation linéaire et la connaissance a priori des entêtes et préambules pour se synchroniser et réaliser ensuite une détection synchrone.

Selon un mode de réalisation particulier, dans le cas de liaisons bidirectionnelles entre les dispositifs de comptage 20 et les dispositifs d'émission/réception 30 du ou des systèmes de passerelle 40, la même architecture que celle qui vient d'être décrite pour supporter la liaison radiofréquence dans le sens montant peut être mise en œuvre pour les communications descendantes du système de passerelle vers les dispositifs de comptage. Dans ce cas, le dispositif d'émission/réception radiofréquence 30 comporte également un émetteur radiofréquence 32 comprenant des moyens de modulation 321 de type FSK, conformes aux spécifications de la norme EN13757-4 et agencés, selon l'invention, pour moduler la porteuse selon un indice de modulation strictement égal à 0,5, de façon que la modulation générée soit à phase cohérente. De son côté, le module radiofréquence 22 des dispositifs de comptage 20 comprend également un récepteur radiofréquence 24 configuré pour exploiter les spécificités de cette modulation. Ainsi, comme expliqué plus haut, un tel récepteur radiofréquence 24 est composé en particulier d'une boucle à verrouillage de phase 240 se synchronisant sur la modulation et le débit binaire (les deux étant synchrones) du signal reçu et d'un détecteur synchrone 241 assurant la détection des bits transmis.

Toutefois, on pourra aussi choisir de n'utiliser la modulation optimisée selon l'invention que pour supporter les communications dans le sens montant, i.e. des dispositifs de comptage vers les systèmes de passerelle, où l'enjeu en termes de récupération des trames transmises est le plus grand. Cette solution intermédiaire permet ainsi de réduire les coûts en évitant d'avoir à faire évoluer le récepteur des modules radiofréquence des dispositifs de comptage pour le rendre synchrone. Pour supporter efficacement la liaison radiofréquence dans ce sens, on pourra plutôt associer le récepteur classique côté dispositif de comptage à un émetteur plus puissant au niveau du dispositif d'émission/réception du système de passerelle et/ou à une modulation plus lente et ce, afin d'équilibrer le bilan de liaison.

## Revendications

1. Procédé pour gérer des transmissions de données numériques dans une installation de télérelève (10) comprenant une pluralité de dispositifs de comptage (20), chaque dispositif de comptage (20) comprenant un module de comptage (21) et un module radiofréquence (22) comprenant un émetteur-récepteur radiofréquence pour communiquer avec un dispositif d'émission/réception radiofréquence (30) d'un système de passerelle (40) de ladite installation (10), ledit procédé comprenant une étape d'émission d'un signal numérique (SIGN) dudit module radiofréquence (22) vers ledit dispositif d'émission/réception radiofréquence (30) et/ou dudit dispositif d'émission/réception radiofréquence (30) vers ledit module radiofréquence (22), ladite émission étant effectuée via une porteuse modulée suivant une modulation par déplacement de fréquence, ledit procédé étant **caractérisé en ce que** ladite modulation par déplacement de fréquence est à indice de modulation strictement égal à 0,5, et **en ce qu'**il comprend une étape de réception du signal émis (SIGN) suivant ladite modulation, et **en ce qu'**on utilise le signal reçu, émis suivant ladite modulation, pour piloter une boucle à verrouillage de phase (310, 240) apte à générer un signal de synchronisation (S_{CLK}) synchronisé sur la modulation, ledit signal de synchronisation (S_{CLK}) pilotant un détecteur (311, 241) destiné à réaliser une détection synchrone du signal reçu grâce audit signal de synchronisation.

2. Dispositif d'émission/réception radiofréquence (30) pour un système de passerelle (40) d'une installation de télérelève (10) comprenant en outre une pluralité de dispositifs de comptage (20), chaque dispositif de comptage (20) comprenant un module de comptage (21) et un module radiofréquence (22), ledit dispositif d'émission/réception radiofréquence (30) étant adapté pour communiquer d'une part, avec un module radiofréquence (22) d'un dispositif de comptage (20) et, d'autre part, avec un dispositif concentrateur (50) dudit système de passerelle en communication avec au moins un réseau de télécommunication externe (1), ledit dispositif d'émission/réception radiofréquence (30) étant **caractérisé en ce qu'**il comprend un récepteur radiofréquence (31) comprenant des moyens de réception pour recevoir d'au moins un dispositif de comptage un signal (SIGN) de modulation à déplacement de fréquence à phase cohérente, ladite modulation par déplacement de fréquence étant à indice de modulation strictement égal à 0,5, des moyens de synchronisation (310) comportant une boucle à verrouillage de phase apte à générer un signal de synchronisation (S_{CLK}) synchronisé sur la modulation et un détecteur (311) destiné à réaliser une détection synchrone dudit signal reçu grâce au signal de synchronisation généré de façon que ladite détection soit synchronisée en fonction dudit signal reçu.

3. Dispositif d'émission/réception radiofréquence selon la revendication 2, **caractérisé en ce qu'**il comprend un émetteur radiofréquence (32) comprenant des moyens de modulation (321) d'une porteuse par déplacement de fréquence, lesdits moyens de modulation (321) étant agencés pour moduler la porteuse selon un indice de modulation strictement égal à 0,5 de façon que la modulation générée soit à phase cohérente.

4. Dispositif de comptage (20) pour une installation de télérelève (10) du type comprenant un module de comptage (21) et un module radiofréquence (21) pour communiquer avec au moins un dispositif d'émission/réception radiofréquence (30) d'un système de passerelle (40) de ladite installation de télérelève (10), ledit module radiofréquence (22) comprenant un émetteur radiofréquence (23) comprenant des moyens de modulation (231) d'une porteuse par déplacement de fréquence, **caractérisé en ce que** lesdits moyens de modulation (231) sont agencés pour moduler la porteuse selon un indice de modulation strictement égal à 0,5 de façon que la modulation générée soit à phase cohérente et **en ce que** ledit module radiofréquence (22) comprend un récepteur radiofréquence (24) comprenant des moyens de réception pour recevoir dudit dispositif d'émission/réception radiofréquence un signal de modulation à déplacement de fréquence à phase cohérente, des moyens de synchronisation (240), comportant une boucle à verrouillage de phase, apte à générer un signal de synchronisation synchronisé sur la modulation et un détecteur (241) destiné à réaliser une détection synchrone dudit signal reçu grâce au signal de synchronisation généré de façon que ladite détection soit synchronisée en fonction dudit signal reçu.

5. Installation de télérelève (10) notamment de compteurs d'eau ou de gaz, comprenant une pluralité de dispositifs de comptage (20) selon la revendication 4 et un système de passerelle (40) comprenant au moins un dispositif d'émission/réception radiofréquence (30) selon l'une quelconque des revendications 2 ou 3.

## Patentansprüche

1. Verfahren zur Verwaltung von Übertragungen digitaler Daten in einer Remote-Leseanlage (10), umfassend eine Vielzahl von Zählvorrichtungen (20), wobei jede Zählvorrichtung (20) ein Zählmodul (21) und ein Funkfrequenzmodul (22) umfasst, das einen Funkfrequenz-Sender-Empfänger zum Kommunizieren mit einer Funkfrequenz-Sende-/Empfangsvorrichtung (30) eines Gateway-Systems (40) der Anlage (10) umfasst, wobei das Verfahren einen Sendeschritt eines digitalen Signals (SIGN) des Funkfrequenzmoduls (22) zur Funkfrequenz-Sende-/Empfangsvorrichtung (30) und/oder von der Funkfrequenz-Sende-/Empfangsvorrichtung (30) zum Funkfrequenzmodul (22) umfasst, wobei die Sendung über einen entsprechend einer Modulation durch Frequenzverschiebung modulierten Träger durchgeführt wird, wobei das Verfahren **dadurch gekennzeichnet ist, dass** die Modulation durch Frequenzverschiebung mit einem Modulationsindex streng gleich 0,5 erfolgt, und dadurch, dass es einen Schritt des Empfangens des entsprechend der Modulation gesendeten Signals (SIGN) umfasst, und dadurch, dass das empfangene Signal, das entsprechend der Modulation gesendet wird, verwendet wird, um eine Schleife mit Phasenverriegelung (310, 240) zu steuern, die imstande ist, ein auf der Modulation synchronisiertes Synchronisationssignal (S_{CLK}) zu erzeugen, wobei das Synchronisationssignal (S_{CLK}) einen Detektor (311, 241) steuert, der dazu bestimmt ist, dank des Synchronisationssignals eine synchrone Detektion des empfangenen Signals zu realisieren.

2. Funkfrequenz-Sende-/Empfangsvorrichtung (30) für ein Gateway-Systyem (40) einer Remote-Leseanlage (10), die weiter eine Vielzahl von Zählvorrichtungen (20) umfasst, wobei jede Zählvorrichtung (20) ein Zählmodul (21) und ein Funkfrequenzmdoul (22) umfasst, wobei die Funkfrequenz-Sende-/Empfangsvorrichtung (30) angepasst ist, um einerseits mit einem Funkfrequenzmodul (22) einer Zählvorrichtung (20), und andererseits mit einer Konzentratorvorrichtung (50) des Gateway-Systems in Kommunikation mit mindestens einem externen Telekommunikationsnetz (1) zu kommunizieren, wobei die Funkfrequenz-Sende-/Empfangsvorrichtung (30) **dadurch gekennzeichnet ist, dass** sie einen Funkfrequenz-Empfänger (31) umfasst, der Empfangsmittel zum Empfangen von mindestens einer Zählvorrichtung eines Modulationssignals (SIGN) mit Frequenzverschiebung mit kohärenter Phase umfasst, wobei die Modulation durch Frequenzverschiebung mit einem Modulationsindex streng gleich 0,5 erfolgt, wobei die Synchronisationsmittel (310) eine Schleife mit Phasenverriegelung beinhalten, die imstande ist, ein auf der Modulation synchronisiertes Synchronisationssignal (S_{CLK}) zu erzeugen, und einen Detektor (311), der dazu bestimmt ist, dank des erzeugten Synchronisationssignals eine synchrone Detektion des empfangenen Signals derart zu realisieren, dass die Detektion in Abhängigkeit von dem empfangenen Signal synchronisiert wird.

3. Funkfrequenz-Sende-/Empfangsvorrichtung nach Anspruch 2, **dadurch gekennzeichnet, dass** sie einen Funkfrequenzsender (32) umfasst, der Modulationsmittel (321) eines Trägers durch Frequenzverschiebung umfasst, wobei die Modulationsmittel (321) angeordnet sind, um den Träger entsprechend einem Modulationsindex streng gleich 0,5 derart zu modulieren, dass die erzeugte Modulation mit kohärenter Phase ist.

4. Zählvorrichtung (20) für eine Remote-Leseanlage (10) in der Art ein Zählmodul (21) und ein Funkfrequenzmodul (21) umfassend, um mit mindestens einer Funkfrequenz-Sende-/Empfangsvorrichtung (30) eines Gateway-Systems (40) der Remote-Leseanlage (10) zu kommunizieren, wobei das Funkfrequenzmodul (22) einen Funkfrequenzsender (23) umfasst, der Modulationsmittel (231) eines Trägers durch Frequenzverschiebung umfasst, **dadurch gekennzeichnet, dass** die Modulationsmittel (231) angeordnet sind, um den Träger entsprechend einem Modulationsindex von streng gleich 0,5 derart zu modulieren, dass die erzeugte Modulation mit kohärenter Phase ist, und dadurch, dass das Funkfrequenzmodul (22) einen Funkfrequenzempfänger (24) umfasst, der Empfangsmittel zum Empfangen von der Funkfrequenz-Sende-/Empfangsvorrichtung eines Modulationssignals mit Frequenzverschiebung mit kohärenter Phase, Synchronisationsmittel (240), die eine Schleife mit Phasenverriegelung beinhalten, die imstande ist, ein auf der Modulation synchronisiertes Synchronisationssignal zu erzeugen, und einen Detektor (241) umfasst, der dazu bestimmt ist, dank des erzeugten Synchronisationssignals eine synchrone Detektion des empfangenen Signals zu derart zu realisieren, dass die Detektion in Abhängigkeit von dem empfangenen Signal synchronisiert wird.

5. Remote-Leseanlage (10), insbesondere von Wasser- oder Gaszählern, eine Vielzahl von Zählvorrichtungen (20) nach Anspruch 4 und ein Gateway-System (40) umfassend, das mindestens eine Funkfrequenz-Sende-/Empfangsvorrichtung (30) nach einem der Ansprüche 2 oder 3 umfasst.

## Claims

1. A method for controlling digital data transmission in a remote-reading installation (10) comprising a plurality of metering devices (20), each metering device (20) comprising a metering module (21) and a radiofrequency module (22) comprising a radiofrequency transmitter/receiver for communicating with a radiofrequency transmission/reception device (30) of a gateway system (40) of said installation (10), said method comprising a step of transmitting a digital signal (SIGN) from said radiofrequency module (22) to said radiofrequency transmission/reception device (30) and/or from said radiofrequency transmission/reception device (30) to said radiofrequency module (22), said transmission being carried out via a carrier modulated by frequency shift modulation, said method being **characterized in that** said frequency shift modulation has a modulation index strictly equal to 0.5, and **in that** it comprises a step of receiving the signal (SIGN) transmitted according to said modulation and **in that** the received signal, transmitted according to said modulation, is used to drive a phase lock loop (310, 240) adapted to generate a synchronization signal(S_{CLK}) synchronized with the modulation, said synchronization signal (S_{CLK}) driving a detector (311, 241) designed to provide synchronous detection of the received signal by means of said synchronization signal.

2. A radiofrequency transmission/reception device (30) for a gateway system (40) of a remote-reading installation (10) further comprising a plurality of metering devices (20), each metering device (20) comprising a metering module (21) and a radiofrequency module (22), said radiofrequency transmission/reception device (30) being adapted to communicate, on the one hand, with a radiofrequency module (22) of a metering device (20) and, on the other hand, with a hub device (50) of said gateway system in communication with at least one external telecommunications network (1), said radiofrequency transmission/reception device (30) being **characterized in that** it comprises a radiofrequency receiver (31) comprising receiving means for receiving a phase-coherent frequency shift modulation signal (SIGN) from at least one metering device, said frequency shift modulation having a modulation index strictly equal to 0.5, synchronization means (310) comprising a phase-lock loop adapted to generate a synchronization signal (S_{CLK}) synchronized with the modulation and a detector (311) designed to provide synchronous detection of said received signal by means of the generated synchronization signal in such a way that said detection is synchronized as a function of said received signal.

3. The radiofrequency transmission/reception device as claimed in claim 2, **characterized in that** it comprises a radiofrequency transmitter (32) comprising means (321) for the frequency shift modulation of a carrier, said modulation means (321) being arranged to modulate the carrier according to a modulation index strictly equal to 0.5, so that the generated modulation is phase-coherent.

4. A metering device (20) for a remote-reading installation (10), of the type comprising a metering module (21) and a radiofrequency module (22) for communicating with at least one radiofrequency transmission/reception device (30) of a gateway system (40) of said remote-reading installation (10), said radiofrequency module (22) comprising a radiofrequency transmitter (23) comprising means (231) for frequency shift modulation of a carrier, **characterized in that** said modulation means (231) are arranged to modulate the carrier according to a modulation index strictly equal to 0.5, so that the generated modulation is phase-coherent, and **in that** said radiofrequency module (22) comprises a radiofrequency receiver (24) comprising receiving means for receiving a phase-coherent frequency shift modulation signal from said radiofrequency transmission/reception device, synchronization means (240) comprising a phase-lock loop adapted to generate a synchronization signal synchronized with the modulation, and a detector (241) designed to provide synchronous detection of said received signal by means of the generated synchronization signal, in such a way that said detection is synchronized as a function of said received signal.

5. A remote-reading installation (10), notably for water or gas meters, comprising a plurality of metering devices (20) as claimed in claim 4, and a gateway system (40) comprising at least one radiofrequency transmission/reception device (30) as claimed in either of claims 2 or 3.
